# EUROPÄISCHE PATENTANMELDUNG

(11) **EP 1 484 150 A2**
(43) Veröffentlichungstag der Anmeldung: **08.12.2004**
(21) Anmeldenummer: 04011196.5
(22) Anmeldetag: 11.05.2004
(51) Int. Cl.: B29C 44/34, B29C 44/38, B29C 33/00, B29C 44/58

(54) **Schäumform**

(30) Priorität: 03.06.2003 DE 10325097
(71) Anmelder: ArvinMeritor GmbH, 63128 Dietzenbach (DE)
(72) Erfinder: Ludwig, Matthias, 38159 Vechelde (DE); Lutz, Marcus, 38518 Gifhorn (DE); Niebuhr, Frank, 38518 Wilsche (DE); Batke, Harald, 38539 Gerstenbüttel (DE)
(74) Vertreter: Sties, Jochen, Dipl.-Ing.

(57) **Zusammenfassung**

Es ist eine Schäumform (10) mit einem ersten Formteil (12) und einem zweiten Formteil (14) vorgesehen, die zwischen sich einen Formhohlraum (16) abgrenzen, wobei in einem der Formteile eine Entlüftungsnut (26) vorgesehen ist, die zum Sammeln von im Formhohlraum eingeschlossenen Gasen dient, und wobei zwischen der Entlüftungsnut (26) und dem Formhohlraum (16) mehrere Überströmkanäle (28) vorgesehen sind.

## Beschreibung

Die Erfindung betrifft eine Schäumform mit einem ersten Formteil und einem zweiten Formteil, die zwischen sich einen Formhohlraum abgrenzen. Die Erfindung betrifft insbesondere eine Schäumform, mit der Fahrzeug-Karosserieteile oder Anbauteile wie Türen, Hauben, Stoßfänger etc. hergestellt werden können, die aus einem Substrat und einer auf das Substrat bzw. Außenschicht aufgebrachten Schicht aus einem schäumbaren Kunststoff bestehen.

Das Karosserieteil wird üblicherweise dadurch hergestellt, daß das Substrat in ein Formteil der geöffneten Schäumform eingelegt wird, dann eine vorbestimmte Menge des schäumbaren Kunststoffmaterials auf das vorzugsweise undurchlässige Substrat aufgebracht wird und anschließend das zweite Formteil auf das erste Formteil dicht aufgesetzt wird, so daß der Formhohlraum der Schäumform geschlossen ist. Dabei wird unvermeidlich Luft im Formhohlraum eingeschlossen. Die Luft wandert, wenn das schäumbare Kunststoffmaterial in der Schäumform reagiert und dabei expandiert, zur Trennebene zwischen dem ersten Formteil und dem zweiten Formteil, so daß sie im Randbereich des Formhohlraums verbleibt. Dadurch besteht die Gefahr, daß Lufteinschlüsse im geschäumten Kunststoffmaterial entstehen, die zu Oberflächendefekten oder Fehlstellen führen können.

Die Aufgabe der Erfindung besteht darin, eine Schäumform zu schaffen, die zu einer besseren Qualität des mit ihr hergestellten Bauteils führt.

Zu diesem Zweck ist erfindungsgemäß eine Schäumform mit einem ersten und einem zweiten Formteil vorgesehen, die zwischen sich einen Formhohlraum abgrenzen, wobei in einem der Formteile eine Entlüftungsnut vorgesehen ist, die zum Sammeln von im Formhohlraum eingeschlossenen Gasen dient, und wobei zwischen der Entlüftungsnut und dem Formhohlraum mehrere Überströmkanäle vorgesehen sind. Die Überströmkanäle sind zweckmäßigerweise so angeordnet, daß im Formhohlraum enthaltene Lufteinschlüsse zu der Entlüftungsnut geführt werden, von wo aus sie aus dem Formhohlraum abgeführt werden können.

Vorzugsweise umschließt die Entlüftungsnut den Formhohlraum, wobei ebenfalls vorzugsweise eine Vielzahl von Überströmkanälen vorgesehen sind, die in regelmäßigen Abständen den Innenraum des Formhohlraumes mit der Entlüftungsnut verbinden. In Abhängigkeit von der geometrischen Ausgestaltung des Formhohlraumes sind die Überströmkanäle jedoch insbesondere an den Stellen angeordnet, zu denen die Lufteinschlüsse üblicherweise wandern; auf diese Weise werden die Lufteinschlüsse wirksam abgeführt bzw. in die Entlüftungsnut abgeleitet.

Vorzugsweise ist vorgesehen, daß die Entlüftungsnut mit mindestens einer Unterdruckleitung in Verbindung steht. Auf diese Weise werden die Lufteinschlüsse besonders effektiv abgesaugt. Ein weiterer Vorteil besteht darin, daß das schäumbare Kunststoffmaterial durch Anlegen eines Unterdrucks in die außenliegenden, üblicherweise schlecht erreichbaren Bereiche des Formhohlraumes gezogen werden kann, so daß der Formhohlraum in der gewünschten Weise vollständig ausgefüllt wird und ein Bauteil ohne Fehlstellen erzeugt wird.

Vorzugsweise ist vorgesehen, daß zwischen nebeneinanderliegenden Überströmkanälen gebildete Rippen einer im gegenüberliegenden Formteil gebildeten Positionierfläche gegenüberliegen, wobei der Abstand zwischen dem Scheitel einer Rippe und der Positionierfläche geringfügig größer ist als die Dicke eines in die Schäumform einzulegenden Substrates. Die Rippen dienen zum Festlegen des Substrates in der Schäumform, wobei sie das Substrat aber nicht fest gegen die Positionierfläche klemmen, sondern lose an der Positionierfläche halten. Anders ausgedrückt verhindern die Rippen, daß sich das Substrat übermäßig weit von der Positionierfläche entfernt.

Gemäß der bevorzugten Ausführungsform der Erfindung ist vorgesehen, daß in einem der Formteile eine Dichtung angeordnet ist, um den Formhohlraum oder die Entlüftungsnut abzugrenzen, und daß die Dichtung mit einer Druckleitung in Verbindung steht, so daß sie mit einem variablen Druck beaufschlagbar ist. Auf diese Weise kann das in die Schäumform eingelegte Substrat, das mit seinem Rand über den Berührbereich zwischen den beiden Formteilen hinaussteht, mit einer variablen Kraft geklemmt werden.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Schnittansicht eine erfindungsgemäße Schäumform im geschlossenen Zustand;
- Figur 2 eine Draufsicht auf eines der Formteile von Figur 1;
- Figur 3 in vergrößertem Maßstab den Ausschnitt III von Figur 1;
- Figur 4 in vergrößertem Maßstab den Bereich IV von Figur 3, wobei im Formhohlraum ein Substrat und darauf aufgebracht ein schäumbares Kunststoffmaterial angeordnet sind; und
- Figur 5 einen Schnitt entlang der Ebene V-V von Figur 4.

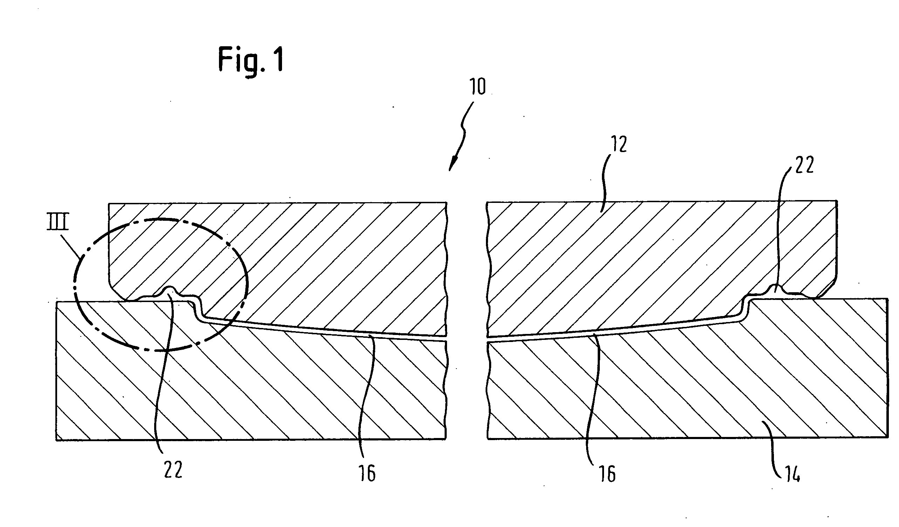

In Figur 1 ist eine Schäumform 10 gezeigt, die aus einem ersten Formteil 12 und einem zweiten Formteil 14 besteht. Die beiden Formteile liegen in der Nähe ihres Außenumfangs aneinander an, so daß zwischen ihnen ein Formhohlraum 16 abgegrenzt ist. Im Formhohlraum 16 kann ein Substrat 18, beispielsweise eine thermoplastisch verformbare Kunststoffolie, angeordnet werden, auf der wiederum ein schäumbares Kunststoffmaterial 20 angeordnet werden kann. Das Substrat 18 und das schäumbare Kunststoffmaterial 20 verbinden sich im Formhohlraum 16 zu einem stabilen Bauteil, das beispielsweise ein Karosserieteil für ein Kraftfahrzeug sein kann, beispielsweise ein Dachmodul.

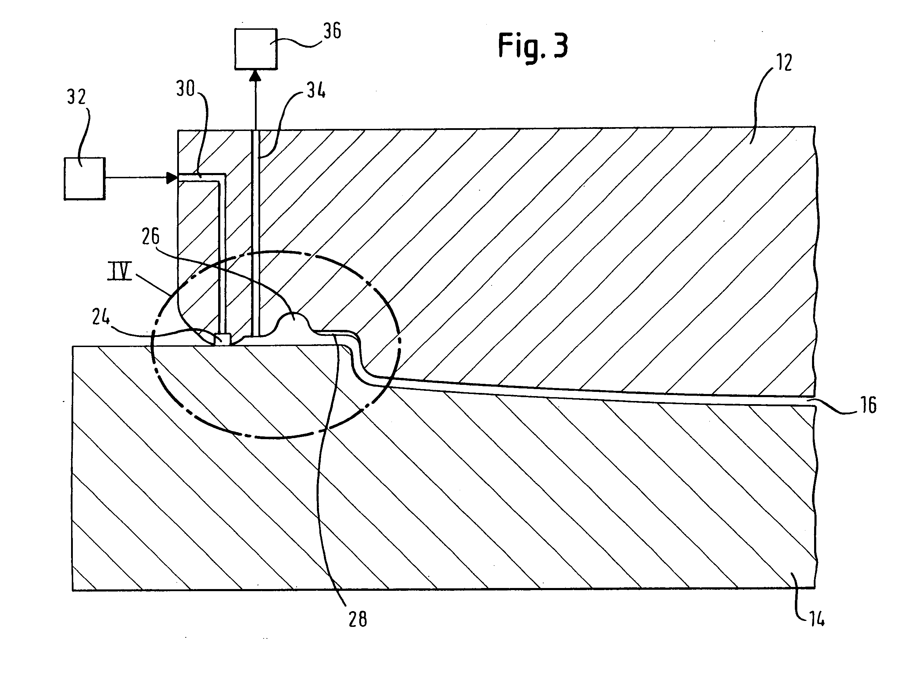

Der Formhohlraum 16 hat eine leicht gewölbte, flache Form (siehe Figur 1) mit stufenartig abgesetzten Randbereichen 22. Die Randbereiche 22 liegen oberhalb der mittleren Bereiche des Formhohlraumes 16. Das erste Formteil 12 weist in den Bereichen, die den Randbereich 22 des Formhohlraumes 16 abgrenzen, eine Dichtung 24, eine Entlüftungsnut 26 und Überströmkanäle 28 auf (siehe insbesondere Figur 3).

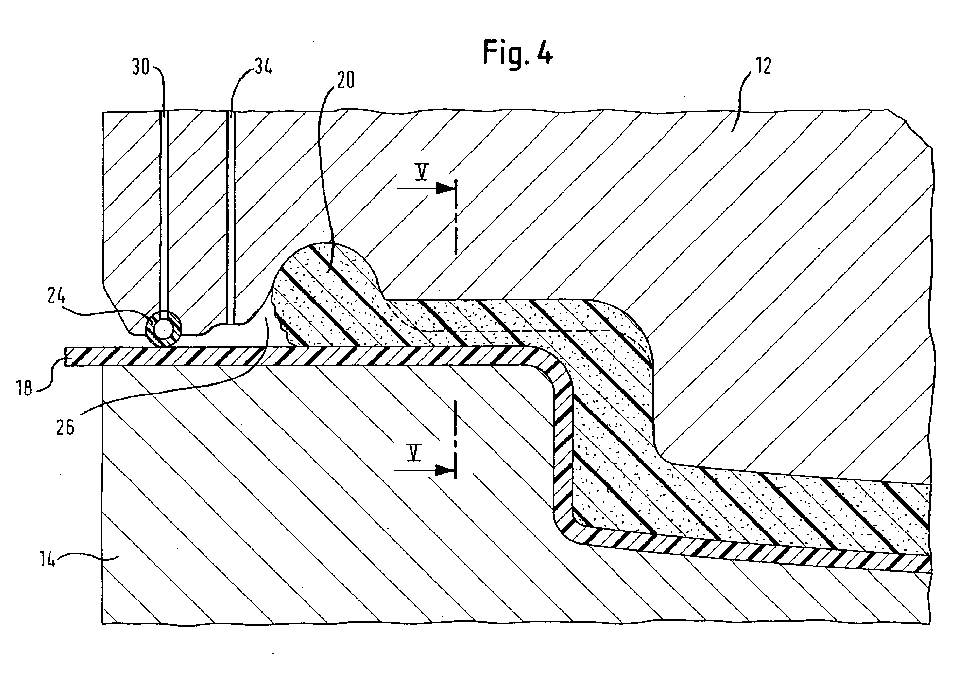

Die Dichtung 24 besteht beispielsweise aus Gummi und ist innen hohl. Der hohle Innenraum der Dichtung steht mit einer Druckleitung 30 (siehe Figur 4) in Verbindung, die wiederum mit einem Drucksteuergerät 32 verbunden ist, das in Figur 3 angedeutet ist.

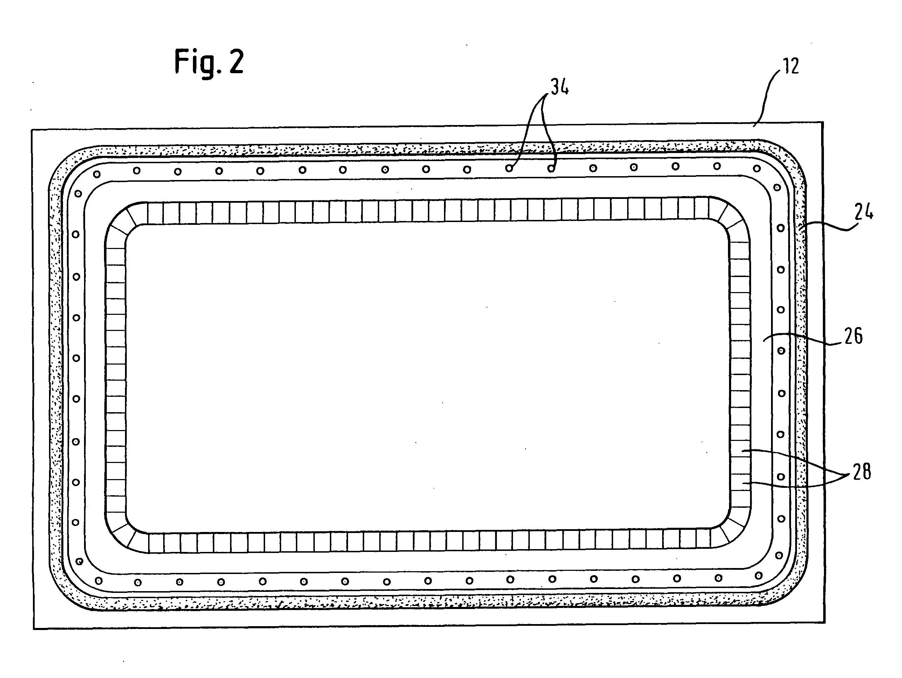

Die Entlüftungsnut 26 besteht aus einem im Querschnitt kreisabschnittsförmigem Hauptabschnitt und einem zur Dichtung 24 hin gelegenen Nebenabschnitt. Der Hauptabschnitt kann beispielsweise mit einem Radius von 15 mm ausgeführt sein. Im Nebenabschnitt der Entlüftungsnut 26 münden in regelmäßigen Abständen Unterdruckleitungen 34 (siehe auch Figur 2), die mit einem Unterdrucksteuergerät 36 in Verbindung stehen, das in Figur 3 angedeutet ist.

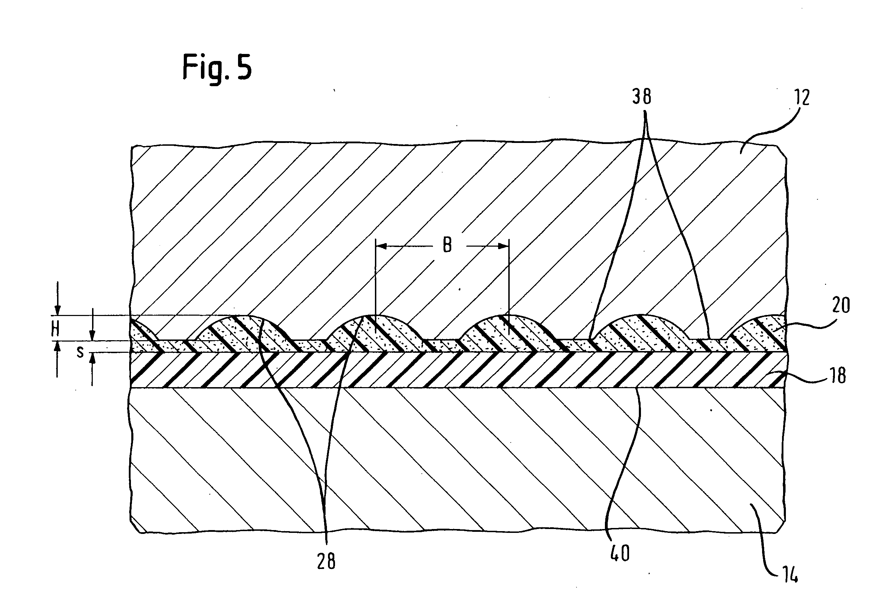

Die Überströmkanäle 28 sind nebeneinanderliegend ausgeführt und bilden ein Zahnoder Wellenprofil (siehe Figur 5). Zwischen nebeneinanderliegenden Überströmkanälen 28 ist jeweils eine Rippe 38 oder ein Steg gebildet. Die Überströmkanäle liegen im Abstand B in der Größenordnung von 5 mm, haben eine Höhe H in der Größenordnung von 0,8 mm und sind gerundet mit einem Radius von 2,5 mm ausgeführt. Die Überströmkanäle 28 bzw. die Rippen 38 sind so dimensioniert, daß die Scheitel der Rippen 38 bei geschlossener Schäumform und in die Schäumform eingelegtem Substrat 18 dem Substrat 18 in einem kleinen Abstand s gegenüberliegen. Dieser Abstand s beträgt in der Größenordnung von 0,2 mm. Auf diese Weise wird das Substrat 18 von den Scheiteln 38 und dem den Scheiteln gegenüberliegendem Bereich des zweiten Formteils 14, der als Positionierfläche 40 wirkt, festgelegt.

Die beschriebene Schäumform wirkt in der folgenden Weise: Zunächst wird bei geöffneter Schäumform auf das zweite Formteil 14 das Substrat 18 aufgelegt. Auf die Oberseite des Substrates wird dann ein schäumbares Kunststoffmaterial aufgebracht, und die Schäumform wird geschlossen, indem das erste Formteil 12 auf das zweite Formteil 14 aufgesetzt wird. Dabei ragt das Substrat 18 über die Dichtung 24 im ersten Formteil 12 nach außen (siehe Figur 4), so daß es von der Dichtung 24 gegen das zweite Formteil 14 geklemmt wird. Die Klemmkraft kann insbesondere mittels des Drucksteuergerätes 32 eingestellt werden.

Das schäumbare Kunststoffmaterial expandiert beim Aushärten und versucht von sich aus, den gesamten Formhohlraum 16 auszufüllen. Dabei wird die im Formhohlraum 16 eingeschlossene Luft verdrängt und durch die Überströmkanäle 28 zur um den gesamten Formhohlraum 16 umlaufenden Entlüftungsnut 26 geleitet. Von dort wird sie, unterstützt durch den vom Unterdrucksteuergerät 36 in der Entlüftungsnut 26 erzeugten Unterdruck, aus dem Formhohlraum abgeführt. Gleichzeitig wird das schäumbare Kunststoffinaterial 20 vom Unterdruck in die Entlüftungsnut 26 gesaugt. Dies ist in Figur 4 dargestellt, in der zu sehen ist, daß das schäumbare Kunststoffmaterial 20 die Entlüftungsnut 26 noch nicht vollständig ausfüllt.

Aufgrund der gleichmäßig verteilten Überströmkanäle 28 wird im Formhohlraum 16 eingeschlossene Luft zuverlässig und vollständig aus dem Formhohlraum 16 abgeführt, so daß Lufteinschlüsse in dem aus dem Substrat 18 und dem schäumbaren Kunststoffinaterial 20 gebildeten Bauteil zuverlässig verhindert sind. Die Überströmkanäle 28 bzw. die Rippen gewährleisten weiterhin die Positionierung des Substrates 18 im Formhohlraum 16, insbesondere im kritischen Bereich des Übergangs vom mittleren Abschnitt zu den abgesetzten Randbereichen 22, wobei das Substrat 18 in diesem Bereich nicht geklemmt wird. Dies ist von großer Bedeutung, da das Substrat 18, wenn es sich um eine Kunststoffolie handelt, beim Expandieren des schäumbaren Kunststoffmaterials 20 im Formhohlraum geringfügig wandert. Würde das Substrat 18 im Bereich der Überströmkanäle 28 durch die Rippen geklemmt werden, bestünde die Gefahr, daß an dieser Stelle Falten oder sonstige Unregelmäßigkeiten entstehen.

## Patentansprüche

1. Schäumform (10) mit einem ersten Formteil (12) und einem zweiten Formteil (14), die zwischen sich einen Formhohlraum (16) abgrenzen, wobei in einem der Formteile eine Entlüftungsnut (26) vorgesehen ist, die zum Sammeln von im Formhohlraum eingeschlossenen Gasen dient, und wobei zwischen der Entlüftungsnut (26) und dem Formhohlraum (16) mehrere Überströmkanäle (28) vorgesehen sind.

2. Schäumform nach Anspruch 1, **dadurch gekennzeichnet, daß** die Entlüftungsnut (26) den Formhohlraum (16) umschließt.

3. Schäumform nach einem der vorhergehenden Ansprüche, **dadurch gekennzeichnet, daß** die Entlüftungsnut (26) mit mindestens einer Unterdruckleitung (34) in Verbindung steht.

4. Schäumform nach einem der vorhergehenden Ansprüche, **dadurch gekennzeichnet, daß** die Entlüftungsnut (26) einen kreisabschnittsförmigen Querschnitt mit einem Radius vom 15 mm hat.

5. Schäumform nach einem der vorhergehenden Ansprüche, **dadurch gekennzeichnet, daß** die Überströmkanäle (28) eng nebeneinander liegen und jeweils durch eine Rippe (38) voneinander getrennt sind.

6. Schäumform nach Anspruch 5, **dadurch gekennzeichnet, daß** die Breite der Rippen (38) maximal gleich der Breite der Überströmkanäle (28) ist.

7. Schäumform nach Anspruch 5 oder Anspruch 6, **dadurch gekennzeichnet, daß** der Abstand zwischen benachbarten Rippen (38) etwa 5 mm beträgt.

8. Schäumform nach einem der Ansprüche 5 bis 7, **dadurch gekennzeichnet, daß** die Rippen (38) einer im gegenüberliegenden Formteil gebildeten Positionierfläche (40) gegenüberliegen, wobei der Abstand zwischen dem Scheitel einer Rippe und der Positionierfläche geringfügig größer ist als die Dicke eines in die Schäumform einzulegenden Substrates (18).

9. Schäumform nach Anspruch 8, **dadurch gekennzeichnet, daß** der Abstand zwischen dem Scheitel einer Rippe (38) und der Positionierfläche (40) um etwa 0,2 mm größer ist als die Dicke des Substrates (18).

10. Schäumform nach einem der vorhergehenden Ansprüche, **dadurch gekennzeichnet, daß** die Überströmkanäle (28) etwa 0,6 mm hoch sind.

11. Schäumform nach einem der vorhergehenden Ansprüche, **dadurch gekennzeichnet, daß** in einem der Formteile eine Dichtung (24) angeordnet ist, um den Formhohlraum (16) abzugrenzen, und daß die Dichtung mit einer Druckleitung (30) in Verbindung steht, so daß sie mit einem variablen Druck beaufschlagbar ist.

12. Bauteil, insbesondere hergestellt mittels einer Schäumform nach einem der vorhergehenden Ansprüche, **dadurch gekennzeichnet, daß** es aus einem Substrat und einer auf dem Substrat aufgebrachten Schicht aus geschäumtem Kunststoff besteht, wobei die Schicht aus geschäumtem Kunststoff einen Randabschnitt aufweist, der aus einem dünnen Übergangsabschnitt mit wellenförmigem Profil und einem Endabschnitt mit dickerem, insbesondere kreisabschnittsförmigem Profil besteht.

13. Verfahren zur Herstellung eines Schichtbauteils mittels einer Schäumform, wobei in die Schäumform ein Substrat eingelegt wird, auf das Substrat ein schäumbares Kunststoffmaterial aufgebracht wird und die Schäumform geschlossen wird, so daß das Kunststoffmaterial expandiert und reagiert, wobei an den in der Schäumform abgegrenzten Formhohlraum ein Unterdruck angelegt wird.
